**Europäisches Patentamt**

**European Patent Office**

**Office européen des brevets**

(11) Numéro de publication : **0 098 196 B2**

(12) # NOUVEAU FASCICULE DE BREVET EUROPEEN

(45) Date de publication du nouveau fascicule du brevet : **15.07.92 Bulletin 92/29**

(51) Int. Cl.⁵ : **C08F 10/00,** C08F 4/02

(21) Numéro de dépôt : **83401219.7**

(22) Date de dépôt : **14.06.83**

(54) **Procédé de préparation de supports à base de chlorure de magnésium pour la préparation de catalyseurs de polymérisation desalpha-oléfines et supports obtenus.**

(30) Priorité : **24.06.82 FR 8211053**

(43) Date de publication de la demande :
**11.01.84 Bulletin 84/02**

(45) Mention de la délivrance du brevet :
**08.01.86 Bulletin 86/02**

(45) Mention de la décision concernant
l'opposition :
**15.07.92 Bulletin 92/29**

(84) Etats contractants désignés :
**AT BE DE FR GB IT NL SE**

(56) Documents cités :
**EP-B- 0 015 048**
**DE-A- 1 957 705**
**DE-A- 2 933 997**
**DE-A- 3 012 272**
**FR-A- 2 439 795**

(56) Documents cités :
**GB-A- 1 434 543**
**GB-A- 1 550 195**
**Catalysis and the Unipol process for ethylene polymerization, Karol et al.,Paper (pp.22-30) presented at 190th ACS NationalMeeting, Chicago, Illinois, Spetember 8-13, 1985**

(73) Titulaire : **BP Chimie Société Anonyme**
**Tour Neptune - La Défense 1 20, place de Seine**
**F-92400 Courbevoie (FR)**

(72) Inventeur : **Bailly, Jean Claude**
**Les Platanes Rue E. Amavet**
**F-13500 Martigues (FR)**
Inventeur : **Sandis, Stylianos**
**1, avenue de la Durance**
**F-13117 Lavera (FR)**

(74) Mandataire : **Patentanwälte Beetz sen. - Beetz jun. Timpe - Siegfried - Schmitt-Fumian**
**Steinsdorfstrasse 10**
**W-8000 München 22 (DE)**

EP 0 098 196 B2

## Description

La présente invention concerne des supports constitués essentiellement de chlorure de magnésium destinés à la préparation de catalyseur de polymérisation et de copolymérisation des $\alpha$-oléfines, ainsi qu'un procédé de préparation de ces supports.

On sait que les catalyseurs de polymérisation des $\alpha$-oléfines, dits Ziegler-Natta, sont obtenus par la combinaison de composés métalliques de transition appartenant aux groupes IV, V ou VI de la classification périodique des éléments avec des composés organométalliques des groupes I à III de cette classification.

On sait que les propriétés de ces catalyseurs peuvent être améliorées, si ledit composé métallique de transition est utilisé avec un composé minéral solide. Ce composé minéral solide peut être coprécipité avec ledit composé métallique de transition ou peut être employé comme support dudit composé métallique de transition.

Comme composé minéral solide utilisable comme support, on peut mentionner, par exemple, les oxydes de magnésium et de titane, le silicate d'aluminium, le carbonate de magnésium et le chlorure de magnésium.

Dans cette technique, où le composé minéral solide est utilisé comme support, il est essentiel que ce support présente un ensemble de propriétés spécifiques de façon que le catalyseur lui-même soit à la fois reproductible, aisément manipulable, susceptible d'un haut rendement, éventuellement stéréospécifique. C'est pourquoi de nombreux travaux ont porté sur des procédés de préparation de ces supports.

Dans le cas plus particulier où le support est du chlorure de magnésium, on a proposé divers procédés de préparation. On a par exemple décrit depuis longtemps la préparation de chlorure de magnésium anhydre à partir d'un composé organo-magnésien; il est effet très connu en chimie organique que la réaction d'un composé organomagnésien avec un composé halogéné minéral ou organique ou organoaluminique donne naissance à de petites particules de chlorure de magnésium.

GB-A-1 550 195 déscrit un procédé de préparation de supports et de catalyseurs à la base de ces supports pour la polymérisation et la copolymérisation des oléfines, notamment de l'éthylène et du propylène. Les supports représentent des particules constituées essentiellement de chlorure de magnésium et d'un composé donneur d'électrons, qui est nécessaire pour la formation des catalyseurs par réaction avec un composé organoaluminium; ils sont obtenus par précipitation dans un milieu d'hydrocarbure liquide, entre autres choses à partir d'un dialcoylmagnésium soluble dans l'hydrocarbure liquide et d'un chlorure d'alcyole.

Une influence de la présence du donneur d'électrons au cours de la précipitation à la granulométrie ou la forme des particules du supports n'est pas mentionnée dans ce document.

On a également décrit la pulvérisation-déshydratation d'un chlorure de magnésium hydraté (GB-A-1 434 543). On a décrit le broyage de particules de chlorure de magnésium, éventuellement en présence soit de réactif, soit d'un composé d'un métal de transition.

La présente invention a pour objet des supports à base de particules de chlorure de magnésium ($MgCl_2$), comprenant un composé donneur d'électrons particulier, de forme sphéroïdale et de granulométrie contrôlée, ces particules étant avantageusement utilisables comme supports pour la fabrication de catalyseurs de polymérisation des $\alpha$-oléfines; et un procédé pour leur préparation.

Cet objet est atteint par les revendications 1 et 11; les revendications dépendantes se référent à des réalisations préférées.

Ces particules de chlorure de magnésium peuvent être obtenues par réaction, connue en elle-même, de décomposition dans un milieu d'hydrocarbure liquide, d'un composé organomagnésien par un composé organique chloré, mais en respectant les conditions suivantes:

– le composé organomagnésien utilisé est un dialcoylmagnésium de formule $R_1MgR_2$ dans laquelle $R_1$ et $R_2$ sont des radicaux alcoyle différents ou identiques ayant de 2 à 12 atomes de carbone, soluble dans le milieu d'hydrocarbure liquide,

– le composé organique chloré est un chlorure d'alcoyle de formule $R_3Cl$ dans laquelle $R_3$ est un alcoyle secondaire ou de préférence tertiaire, ayant de 3 à 12 atomes de carbone, le rapport molaire entre ce composé organique chloré et le composé organomagnésien étant compris entre 1,5 et 2,5,

– la réaction est effectuée en présence d'un composé donneur d'électrons ayant un pouvoir complexant et étant choisi parmi les sulfoxides, les sulfones et les éthers et l'hexaméthylphosphorotriamide, en quantité telle que le rapport molaire entre ce composé donneur d'électron et le composé organomagnésien est compris entre 0,01 et 2 et, de préférence, entre 0,01 et 1,

– la réaction a lieu sous agitation, au sein d'un hydrocarbure liquide, à une température comprise entre 5 et 80° C.

Le composé organomagnésien utilisé a pour formule $R_1MgR_2$ dans laquelle $R_1$ et $R_2$ sont des radicaux alcoyles identiques ou différents ayant de 2 à 12 atomes de carbone. Une des propriétés importantes de ce composé organomagnésien est d'être soluble dans le milieu hydrocarboné dans lequel la réaction sera effectuée. L'expérience prouve qu'il n'y a pas intérêt à utiliser des produits dans lesquels les radicaux $R_1$ et $R_2$ sont

trop lourds parce que, d'une part, lesdits produits ont des réactivités -toutes choses àgales par ailleurs-de plus en plus faibles au fur et à mesure que le nombre d'atomes de carbone de $R_1$ et $R_2$ augmente que, d'autre part, les alcanes ($R_1H$ et $R_2H$) issus de la réaction sont difficiles à séparer du milieu de réaction et enfin parce que la teneur pondérale en magnésium dans le composé organomagnésien diminue avec l'augmentation du nombre de carbone de $R_1$ et $R_2$.

Des considérations assez voisines (réactivités, nature des produits obtenus et rendement en poids) s'appliquent au choix du composé organique chloré et c'est pour cela que $R_3$ ne doit pas contenir trop d'atomes de carbone. Par ailleurs jusqu'à ce jour, les meilleurs résultats ont été obtenus avec des produits $R_3Cl$ dans lesquels $R_3$ est un alcoyle tertiaire. Le rapport molaire entre $R_3Cl$ et le composé organomagnésien doit être compris entre 1,5 et 2,5 environ. Si ce rapport est inférieur à 1,5 (la quantité stoechiométrique étant 2), le rendement de la réaction diminue de façon notable. D'autre part, il est apparu que, lorsque ce rapport molaire augmente de 1,5 à 2, la densité des particules de chlorure de magnésium obtenues selon la présente invention décroît légèrement, puis que cette densité décroît rapidement lorsque ce rapport molaire augmente au-delà de 2. Or l'expérience a montré que, dans certains cas, il est intéressant d'utiliser un catalyseur préparé à partir de particules de chlorure de magnésium ayant une densité relativement élevée. Il est alors préférable de respecter un rapport molaire $R_3Cl/R_1MgR_2$ inférieur à 2 et plus particulièrement compris entre 1,85 et 1,95. Dans ces conditions, on constate que le milieu réactionnel contient, en fonction de la nature et de la quantité du composé donneur d'électron mis en oeuvre, des produits comportant des liaisons Mg-C, solubles dans le milieu d'hydrocarbure liquide. On constate également que les particules de chlorure de magnésium obtenues contiennent généralement, après plusieurs lavages et extractions à l'aide d'hydrocarbure liquide, des produits comportant au moins une liaison Mg-C. De tels supports sont particulièrement utiles pour la préparation de catalyseur pour la polymérisation ou la copolymérisation de l'éthylène.

L'expérience a montré que le rapport molaire $R_3Cl/R_1MgR_2$ peut être égal ou supérieur à 1,95, et de préférence compris entre 2,0 et 2,2 et que les particules de chlorure de magnésium obtenues ne contiennent pas de produits ayant au moins une liaison Mg-C. Elles constituent des supports particulièrement utiles pour la préparation de catalyseurs destinés à la polymérisation ou la copolymérisation du propylène.

Le composé donneur d'électrons est un composé organique connu comme tel, ou comme base de Lewis, choisi parmi les sulfoxides, les sulfones et les éthers et l'hexaméthylphosphorotriamide. La quantité du composé donneur d'électron à mettre en oeuvre dépend en partie de la nature et de la quantité du composé organomagnésien et de la nature du composé donneur d'électron, notamment de son pouvoir complexant. Ainsi, si l'on choisit un composé donneur d'électron de pouvoir complexant élevé, tel que, par exemple, l'hexaméthylphosphorotriamide (HMPT), ce composé doit être présent en une quantité d'au moins environ 0,01 mol par mole de $R_1MgR_2$ mis en oeuvre. Par contre, dans le cas où l'on utilise un composé donneur d'électrons de faible pouvoir complexant, tel que, par exemple, un éther la quantité utilisée doit être d'au moins environ 0,03 mol de donneur d'électrons par mole de $R_1MgR_2$ mis en oeuvre. Si la quantité du donneur d'électron est inférieure à ces limites, on constate que les particules de chlorure de magnésium obtenues présentent des formes moins régulières et une distribution granulométrique relativement large. Si, par contre, la quantité de composé donneur d'électron est trop élevée, en particulier égale ou supérieure à environ 2 mol par mole de $R_1MgR_2$ mis en oeuvre, on constate que la réaction se déroule moins régulièrement, notamment lors de son démarrage, ce qui conduit à des particules de chlorure de magnésium de forme et de distribution granulométrique non désirées.

Des résultats particulièrement intéressants sont obtenus, lorsqu'on utilise comme composé donneur d'électrons, un éther aliphatique de formule $R_4OR_5$ dans laquelle $R_4$ et $R_5$ sont des radicaux alcoyle identiques ou différents ayant de 1 à 12 atomes de carbone, en quantité telle que le rapport molaire entre cet éther et le composé organomagnésien est compris entre 0,01 et 2, de préférence, entre 0,03 et 1, et en particulier entre 0,2 et 0.5. Dans le cas d'utilisation d'un tel éther- aliphatique, il est préférable que la réaction soit effectuée en milieu agité, à une température constante comprise, de préférence, entre 35 et 80° C.

La mise en oeuvre du composé donneur d'électrons peut être réalisée de diverses façons qui dépendent en partie de la nature même du composé donneur d'électrons et de la nature de $R_1MgR_2$. On peut, par exemple dans le cas de composé donneur d'électron de pouvoir complexant élevé, ajouter ledit composé donneur d'électron en totalité à $R_1MgR_2$ ou, de préférence, à $R_3Cl$ avant le démarrage de la réaction; mais on peut également répartir le composé donneur d'électron entre $R_1MGR_2$ et $R_3Cl$. Si l'on utilise un composé donneur d'électron de faible pouvoir complexant, tel qu'un éther ce dernier peut être de préférence introduit soit en totalité avec $R_1MgR_2$, soit réparti entre $R_1MgR_2$ et $R_3Cl$; dans ce dernier cas, il convient de préférence d'admettre, dans le milieu d'hydrocarbure liquide et avant l'introduction des réactifs, au moins 0,03 mol du composé donneur d'électron par mole de $R_1MgR_2$ mis en oeuvre.

La réaction entre $R_1MgR_2$ et $R_3Cl$ donne naissance à un produit solide; il s'agit donc d'une précipitation; le spécialiste sait que, dans ce cas, des facteurs physiques tels que la viscosité du milieu, le mode et la vitesse d'agitation, les conditions de mise en oeuvre des réactifs, l'agitation, la durée de réaction peuvent, toutes choses égales par ailleurs, jouer un rôle important dans la forme, la structure, la taille et la distribution granulométrique des particules précitées.

Il en est bien évidemment ainsi dans la présente invention et c'est pourquoi on indique que:

a) Si l'on désire obtenir un support de distribution granulométrique très étroite, définie par le rapport du diamètre moyen en masse, Dm, au diamètre moyen en nombre, Dn, compris entre environ 1,1 et 1,5, il est souhaitable que:

– la réaction s'effectue en introduisant progressivement $R_3Cl$ dans le milieu d'hydrocarbure liquide contenant $R_1MgR_2$,

– la réaction s'effectue en présence d'un composé donneur d'électron en quantité telle que le rapport molaire entre ledit composé donneur d'électron et $R_1MgR_2$ soit inférieur à 1,

– la réaction s'effectue dans un hydrocarbure liquide agité à une vitesse constante pendant toute la durée de la réaction, et

– toutes choses égales par ailleurs, la réaction soit relativement lente, de l'ordre d'au moins 1 h, de façon à permettre une organisation convenable du produit solide formé.

b) Si l'on désire obtenir un support de distribution granulométrique moins étroite que précédemment, telle que le rapport Dm/Dn soit compris entre environ 1,5 et 3, et en particulier compris entre 1,5 et 2,5, il est souhaitable que:

– introduisant progressivement $R_3Cl$ dans le milieu d'hydrocarbure liquid contenant $R_1MgR_2$, la vitesse d'agitation soit modifiée à un instant tel que la quantité de $R_3Cl$ introduite dans le milieu réactionnel correspondante à un rapport molaire $R_3Cl/R_1MgR_2$ égal ou inférieur à 0,25, ou

– que la réaction soit effectuée en introduisant, dans une première étape, d'une façon progressive et simultanée $R_3Cl$ et $R_1MgR_2$ dans le milieu d'hydrocarbure liquide en quantités telles qu'au maximum 50% des quantités mises en oeuvre de ces deux réactifs soient introduites, puis, dans une seconde étape, en introduisant d'abord rapidement la quantité restante de $R_1MgR_2$ et ensuite progressivement la quantité restante de $R_3Cl$ dans le milieu réactionnel,

– que la vitesse d'agitation soit éventuellement modifiée à un instant quelconque de la première étape, citée ci-dessus, d'addition progressive et simultanée de $R_3Cl$ et $R_1MgR_2$ dans le milieu d'hydrocarbure liquide.

Lorsqu'on met en oeuvre le procédé tel que décrit ci-dessus, on réalise un support constitué de particules contenant essentiellement du chlorure de magnésium et qui présentent les propriétés suivantes:

– les particules ont une forme sphéroïdale, définie par le fait que, si D et d sont les grands et petits axes des particules, D/d $\leqq$ 1,3;

– les particules ont un diamètre moyen en masse réglable à volonté et qu'il est compris entre 10 et 100 μm environ;

– la distribution granulométrique de ces particules est telle que le rapport du diamètre moyen en masse au diamètre moyen en nombre, Dm/Dn, est contrôlable à volonté et inférieur ou égal à 3, et en particulier compris entre 1,1 et 2; on constate en outre l'absence pratiquement totale de grosses particules de diamètre supérieur à 2 x Dm et de fines particules de diamètre inférieur à 0,2 x Dm. La distribution granulométrique peut en outre être telle que plus de 90% en poids des particules d'un même lot sont compris dans la fourchette Dm ±10%;

– les particules peuvent présenter une surface légèrement bosselée, telle que celle d'une framboise, mais présentent de préférence une surface très lisse;

– la surface spécifique des particules est d'environ 20 à 60 m²/g (BET);

– la densité des particules est réglable à volonté entre 1,2 et 2,2 et dépend de la proportion des réactifs mis en oeuvre;

– la composition chimique du support telle que:

i) dans le but de préparer des catalyseurs destinés à la polymérisation et la copolymérisation de l'éthylène, le rapport atomique Cl/Mg du support est légèrement inférieur à 2; le support contient à la fois de faibles proportions de produits à liaison Mg-C et d'un composé donneur d'électrons;

ii) dans le but de préparer des catalyseurs destinés à la polymérisation et la copolymérisation du propylène, le rapport atomique Cl/Mg du support est sensiblement égal à 2.

Les supports à base de chlorure de magnésium, selon la présente invention, sont utilisés pour la préparation de catalyseurs de polymérisation ou de copolymérisation d'α-oléfines.

Cette préparation de catalyseurs peut s'effectuer par tous moyens connus consistant à déposer, sur la surface du support, un produit actif qui est un composé tel qu'un chlorure d'un métal de transition des groupes IV, V et VI de la classification périodique des éléments, de préférence le titane. Ce composé métallique pourra être adapté, de façon connue, à la polymérisation de l'α-oléfine que l'on voudra réaliser.

Il est important que les supports selon l'invention présentent un ensemble de propriétés physicochimiques et mécaniques spécialement adaptées à la préparation de poudre de polymère et/ou copolymères présentant une densité apparente élevée, ce qui se révèle intéressant sur le plan technique, aussi bien pour des procédés de polymérisation en suspension dans un hydrocarbure que de polymérisation sans solvant, comme par exemple en lit fluidisé.

*Méthode de détermination des diamètres moyens en masse (Dm) et en nombre (Dn) des particules de support de chlorure de magnésium.*

Selon l'invention, les diamètres moyens en masse (Dm) et en nombre (Dn) des particules de support de chlorure de magnésium sont mesurés à partir d'observations microscopiques, au moyen de l'analyseur d'images Optomax (Micro Measurements Ltd., Grande Bretagne). Le principe de la mesure consiste à obtenir à partir de l'étude expérimentale par microscopie optique d'une population de particules de chlorure de magnésium une table d'effectifs où est donné le nombre $(n_i)$ de particules appartenant à chaque classe (i) de diamètre, chaque classe (i) étant caractérisée par un diamètre intermédiaire $(d_i)$, compris entre les limites de ladite classe. Suivant la norme française NF X 11-630 de juin 1981, Dm et Dn sont fournis par les formules suivantes:

$$.\text{diamètre moyen en masse: Dm} = \frac{\Sigma n_i \, (d_i^3) \, d_i}{\Sigma n_i \, (d_i^3)}$$

$$.\text{diamètre moyen en nombre} = \frac{\Sigma n_i \cdot d_i}{n_i}$$

Le rapport Dm/Dn caractérise la distribution granulométrique; il est parfois appelé largeur de distribution granulométrique.

La mesure par l'analyseur d'images Optomax est réalisée au moyen d'un microscope inversé qui permet l'examen des suspensions de particules de chlorure de magnésium avec un grossissement compris entre 16 et 200 fois. Une caméra de télévision reprend les images données par le microscope inversé et les transmet à un ordinateur, qui analyse les images ligne par ligne et point par point sur chaque ligne en vue de déterminer les dimensions ou diamètres des particules puis de les classer.

Les exemples suivants illustrent l'invention.

*Exemple 1:*

Dans un réacteur en verre de 1 l muni d'un système d'agitation mécanique et d'une double enveloppe, préalablement rempli d'azote, on introduit sucessivement 150 ml de n-heptane, 0,1 mol (13,85 g) de 5-butyl n-butyl magnésium ainsi que des quantités diverses d'éther diisoamylique précisées dans le tableau 1.

Après homogénéisation, le milieu réactionnel est porté en 15 min à la température de 50° C, sous une agitation d'environ 500 tr/min.

A l'aide d'une pompe doseuse, on introduit progressivement en 2 h, dans le réacteur, 210 mmol (19,44 g) de chlorure de t-butyle et on maintient pendant 2 h supplémentaires le milieu réactionnel à 50° C. Le liquide est séparé du précipité formé et celui-ci est lavé dans le réacteur même, plusieurs fois au n-heptane à la température ambiante (20° C).

L'analyse du précipité formé montre qu'il s'agit d'un solide constitué essentiellement de chlorure de magnésium, de particules sphéroïdiques et de distribution granulométrique étroite, définie par le rapport Dm/Dn dont la valeur est comprise entre 1,1 de 2,0. En l'absence total de composé donneur d'électron (essai 1/1 comparatif), les particules obtenues sont de forme très irrégulière et de distribution granulométrique large (Dm/Dn = 4,5).

*Exemple 2:*

Dans un réacteur de 5 l en acier inoxydable, muni d'un système d'agitation tournant à 750 min$^{-1}$ et contenant 800 ml de n-hexane, on introduit à la température ambiante (20° C) et sous couverture d'azote: 1725 ml d'une solution de butyloctylmagnésium dans le n-hexane contenant 1500 mmol de magnésium et 153 ml (750 mmol) d'éther diisoamylique. Le réacteur est alors chauffé à 50° C et on y verse goutte à goutte en 3 h 313 ml de chlorure de t-butyle (soit 2850 mmol). A la fin de cette addition, on maintient la suspension à 50° C pendant 3 h et, ensuite, on lave le précipité obtenu cinq fois avec du n-hexane. Le produit solide lavé constitue le support dont la composition chimique est la suivante par mole de magnésium: 1,96 de chlore; 0,04 mol de Mg-C et 0,02 mol d'éther diisoamylique. A l'examen microscopique, il se présente sous forme d'une poudre constituée de particules sphéroïdiques (le rapport moyen entre grand et petit axes, D/d, des particules et égal à 1,2) ayant une distribution granulométrique telle que Dm/Dn = 1,1 et Dm = 52 $\mu$m; on trouve, en outre, que plus de 90% en poids des particules ont un diamètre moyen compris entre 47 et 57 $\mu$m; la densité du produit est égale à 1,9 et sa surface spécifique égale à 38 m$^2$/g (BET).

*Exemple 3:*

La préparation est identique à celle de l'exemple 2, excepté le fait que la quantité d'éther diisoamylique en mélange avec le butyloctylmagnésium est de 61 ml (300 mmol) au lieu de 153 ml (750 mmol). L'analyse du produit solide formé montre qu'il contient par mole de magnésium: 1,96 mol de chlore; 0,04 mol de Mg-C et 0,01 mol d'éther diisoamylique. A l'examen microscopique, la poudre obtenue se présente sous forme de particules sphéroïdiques de distribution granulométrique telle que Dm/Dn = 1,3 avec Dm = 32 $\mu$m, on mesure moins de 0,1% en poids de particules de diamètre inférieur à 5 $\mu$m; les particules sphéroïdiques de chlorure de magnésium obtenues dans cet exemple présentent une surface légèrement bosselée du type framboise; la densité du produit est égale à 1,8 et sa surface spécifique égale à 41 m$^2$/g (BET).

*Exemple 4:*

La préparation est identique à celle de l'exemple 2, excepté le fait que l'éther diisoamylique, au lieu d'être utilisé en mélange exclusif avec le butyl-octylmagnésium, est réparti entre ce dernier et le chlorure de t-butyle: 9,1 ml (soit 44,7 mmol) en mélange avec la solution de butyloctylmagnésium dans l'hexane et 91 ml (soit 447 mmol) en mélange avec le chlorure de t-butyle. L'analyse du produit solide obtenu donne la composition suivante par mole de magnésium: 1,95 mol de chlore, 0,05 mol de Mg-C et 0,02 mol d'éther diisoamylique. A l'examen microscopique, la poudre se présente sous forme de particules sphéroïdiques de distribution granulométrique telle que Dm/Dn = 1,2 avec Dm = 23 $\mu$m; on trouve moins de 0,05% en poids de particules de diamètre inférieur à 4,6 $\mu$m; la petite taille des particules sphéroïdiques obtenues dans cet exemple est due à la faible quantité de composé donneur d'électron mise en jeu avec le butyloctylmagnésium; les particules sphéroïdiques présentent une surface extrêmement lisse et sans bosse; cela est dû au composé donneur d'électron ajouté en mélange au chlorure de t-butyle; la densité du produit est particulièrement élevée et égale à 2,1 et sa surface spécifique égale à 46 m$^2$/g (BET).

*Exemples 5 et 6:*

La préparation est identique à celle de l'exemple 4 excepté le fait que la vitesse d'agitation est fixée à 600 tr/min pour l'exemple 5 et à 500 min$^{-1}$ pour l'exemple 6; ceci a pour effet d'augmenter le diamètre moyen en masse des particules sphéroïdiques qui passe de 23 $\mu$m (exemple 4) à 38 $\mu$m pour l'exemple 5 et à 47 $\mu$m pour l'exemple 6.

La distribution granulométrique est telle que dans tous les cas Dm/Dn est compris entre 1,1 et 1,5.

*Exemple 7:*

La préparation est identique à celle de l'exemple 2, excepté le fait que l'éther diéthylique est employé au lieu et place de l'éther diisoamylique et en bien moindre quantité, soit 4,7 ml (45 mmol) d'éther diéthylique dans la solution contenant le butyloctylmagnésium. A l'examen microscopique, la poudre se présente sous forme de particules sphéroïdiques de distribution granulométrique telle que Dm/Dn = 1,3 avec Dm = 11 $\mu$m; les particules sphéroïdiques présentent une surface légèrement bosselée, du type framboise.

*Exemple 8:*

Dans un réacteur de 5 l en acier inoxydable, muni d'un système d'agitation tournant à 650 min$^{-1}$ et contenant 1 l de n-hexane, on introduit à la température ambiante (20° C) et sous couverture d'azote: 1725 ml d'une solution de butyloctylmagnésium dans l'hexane contenant 1500 mmol de magnésium. Le réacteur est chauffé à 55° C, et on y verse progressivement en 6 h un mélange préalablement préparé contenant 313 ml de chlorure de t-butyle (soit 2850 mmol) et 7,9 ml d'hexaméthylphosphorotriamide (HMPT) (soit 45 mmol). A la fin de cette solution, on maintient la suspension à 55° C pendant 3 h et, ensuite, on lave le précipité obtenu cinq fois avec du n-hexane. Le produit solide constitue le support dont la composition chimique est la suivante par mole de magnésium: 1,99 mol de chlore, 0,01 mol de Mg-C et 0,03 mol d'HMPT. A l'examen microscopique, la poudre se présente sous forme de particules sphéroïdiques de distribution granulométrique telle que Dm/Dn = 1,25 avec Dm = 23 $\mu$m; on trouve moins de 0,1% en poids de particules de diamètre inférieur à 5 $\mu$m; les particules

sphéroïdiques présentent une surface légèrement bosselée, du type framboise.

*Exemple 9:*

La préparation est identique à celle de l'exemple 3, excepté le fait que le butyloctylmagnésium est remplacé par le s-butyl n-butylmagnésium. La poudre obtenue donne à l'analyse les résultats suivants par mole de magnésium: 1,95 mol de chlore, 0,05 mol de Mg-C et 0,03 mol d'éther diisoamylique; la poudre se présente sous forme de particules sphéroïdiques de distribution granulométrique telle que Dm/Dn = 1,5 avec Dm = 30 µm; contrairement à l'exemple 3, la surface des particules sphéroïdiques est très lisse et sans bosse.

*Exemple 10:*

La préparation est identique à celle de l'exemple 3, excepté le fait que le butyloctylmagnésium est remplacé par le butyléthylmagnésium. Le produit solide obtenu contient par mole de magnésium: 1,98 mol de chlore, 0,02 mol de Mg-C et 0,01 mol d'éther diisoamylique; la poudre se présente sous forme de particules sphéroïdiques de distribution granulométrique telle que Dm/Dn = 1,4 avec Dm = 34 µm; en outre, comme dans l'exemple 9, la surface des particules sphéroïdiques est très lisse et sans bosse.

*Exemple 11:*

La préparation est identique à celle de l'exemple 4, excepté le fait que le butyloctylmagnésium est remplacé par le s-butyl n-butylmagnésium. Le support solide obtenu se présente sous forme de particules sphéroïdiques de distribution granulométrique telle que Dm/Dn = 1,1 avec Dm = 20 µm; on trouve en outre que plus de 90% en poids des particules ont un diamètre moyen compris entre 18 et 22 µm; la densité du produit est égale à 1,85.

*Exemple 12:*

Dans un réacteur de 5 l en acier inoxydable, muni d'un système d'agitation tournant à 500 tr/min et contenant 1 l de n-hexane, on introduit à la température ambiance (20° C) et sous couverture d'azote, 9,5 ml (47 mmol) d'éther diisoamylique. Le réacteur est chauffé à 55° C, et on y introduit progressivement pendant 1 h et simultanément, d'une part, 667 ml d'une solution 0,81 M de butyloctylmagnésium dans le n-hexane et, d'autre part, 148 ml d'un mélange préalablement préparé de 348 ml de chlorure de t-butyle et de 95 ml d'éther diisoamylique. Au bout de ce temps, on introduit dans le milieu réactionnel en une seule fois et rapidement 1334 ml de la solution 0,81 M de butyloctylmagnésium dans le n-hexane et progressivement pendant 2 h les 295 ml restants du mélange préalablement préparé de chlorure de t-butyle et d'éther diisoamylique. Le mélange est ensuite maintenu pendant 3 h, sous agitation, à 55° C. Le produit obtenu est lavé plusieurs fois avec du n-hexane. Le support de chlorure de magnésium est constitué de particules sphéroïdiques de distribution granulométrique telle que Dm/Dn = 1,6 avec Dm = 15 µm.

*Exemple 13:*

La préparation est identique à celle de l'exemple 12, excepté le fait que la vitesse d'agitation au lieu d'être constamment égale à 500 min$^{-1}$, est égale à 400 min$^{-1}$ pendant la première ½ h de la réaction où l'on introduit progressivement et simultanément le butyloctylmagnésium et le mélange de chlorure de t-butyle et d'éther diisoamylique, puis à 800 min$^{-1}$ pendant les 2½ h suivantes. A la fin de l'introduction de tous les réactifs dans le milieu réactionnel, la vitesse d'agitation est réduite à 400 min$^{-1}$. Le support de chlorure de magnésium obtenu est constitué de particules sphéroïdiques de distribution granulométrique telle que Dm/Dn = 2,5 avec Dm = 18 µm.

*Exemple 14:*

Dans un réacteur de 5 l en acier inoxydable, muni d'un système d'agitation tournant à 400 tr/min et contenant 1 l de n-hexane, on introduit à la température ambiance (20° C) et sous couverture d'azote, 9,5 ml (47 mmol) d'éther diisoamylique. Le réacteur est chauffé à 55° C, et on y introduit progressivement pendant 1 h et simultanément, d'une part, 667 ml d'une solution 0,81M de butyloctylmagnésium dans le n-hexane et, d'autre part, 116 ml de chlorure de t-butyle. Après ½ h de cette introduction progressive et simultanée des réactifs, on augmente la vitesse d'agitation à 800 tr/min. La fin de cette introduction progressive et simultanée des réactifs, on maintient la vitesse d'agitation à 800 tr/min, et on introduit dans le milieu réactionnel en une seule fois et rapidement 1334 ml de la solution 0,81M de butyloctylmagnésium dans le n-hexane, puis progressivement, pendant 2 h, 232 ml de chlorure de t-butyle. Au bout de ce temps, la vitesse d'agitation est réduite à 400 tr/min, le mélange maintenu pendant 3 h à 55° C. Le produit solide obtenu est lavé plusieurs fois avec du n-hexane. Le support de chlorure de magnésium est constitué de particules sphéroïdiques de distribution granulométrique telle que Dm/Dn = 2,4 avec Dm = 15 $\mu$m.

Tableau

| Essai | Ether Diisoamylique | | $MgCl_2$ produit | | | | |
|---|---|---|---|---|---|---|---|
| | Quantité (mmol) | Rapport molaire éther/composé organomagnésium | Quantité (g) | Rendement (en % mole) | Forme des particules | Dm ($\mu$m) | $\dfrac{Dm}{Dn}$ |
| 1/1 (Comparatif) | 0 | 0 | 5,7 | 60 | très petites particules de forme irrégulière; granulométrie étalée | 20 | 4,5 |
| 1/2 | 30 | 0,3 | 8,6 | 90 | particules sphériques | 30 | 1,3 |
| 1/3 | 60 | 0,6 | 8,9 | 93 | particules sphériques | 40 | 1,1 |
| 1/4 | 100 | 1 | 8,9 | 93 | particules sphériques | 60 | 1,4 |
| 1/5 | 200 | 2 | 8,9 | 93 | particules sphériques | 65 | 2,0 |

## Revendications

1. Procédé de préparation de supports de catalyseurs pour la polymérisation et la copolymérisation des $\alpha$-oléfines, notamment de l'éthylène et du propylène, constitués de particules, lesdites particules étant constituées essentiellement de chlorure de magnésium et d'un composé donneur d'électrons et obtenues par précipitation dans un milieu d'hydrocarbure liquide à partir d'une dialcoylmagnésium de formule $R_1MgR_2$, dans laquelle $R_1$ et $R_2$ sont des radicaux alcoyle identiques ou différents ayant de 2 à 12 atomes de carbone, soluble dans l'hydrocarbure liquide, et d'un chlorure d'alcoyle,
**caractérisé** en ce que
la précipitation est effectuée dans les conditions suivantes:
  – On utilise un chlorure d'alcoyle de formule $R_3Cl$, dans laquelle $R_3$ est un radical alcoyle secondaire ou tertiaire, ayant de 3 à 12 atomes de carbone, le rapport molaire entre ce chlorure d'alcoyle et le dialcoylmagnésium étant compris entre 1,5 et 2,5,
  et
  – la précipation est effectuée
    – en présence d'un composé donneur d'électrons ayant un pouvoir complexant et étant choisi parmi les sulfoxides, les sulfones et les éthers et l'hexaméthylphosphorotriamide en quantité telle que le rapport molaire entre entre ce composé donneur d'électrons et le dialcoylmagnésium est compris entre 0,01 et 2,
    et
    – sous agitation, à une température comprise entre 5 et 80° C
de telle manière que l'on obtient des particules sphéroidiques ayant un diamètre moyen en masse, Dm, compris entre 10 et 100 $\mu$m et un rapport du diamètre moyen en masse Dm au diamètre moyen en nombre, Dn, inférieur ou égal à 3.

2. Procédé selon la revendication 1, caractérisé en ce qu'on utilise comme composé donneur d'électrons un éther aliphatique de formule $R_4OR_5$, dans laquelle $R_4$ et $R_5$ sont des radicaux alcoyle identiques ou différents ayant de 1 à 12 atomes de carbone.

3. Procédé selon la revendication 2, caractérisé en ce que la précipitation est effectuée à une température comprise entre 35 et 80° C, en utilisant un rapport molaire entre cet éther et le dialcoylmagnésium entre 0,03 et 1 et, de préférence, compris entre 0,2 et 0,5, cet éther pouvant être introduit soit en totalité avec le dialcoylmagnésium, soit réparti entre ce dernier et le chlorure d'alcoyle.

4. Procédé selon une des revendications 1 à 3, caractérisé en ce que la précipitation est réalisée en introduisant progressivement le chlorure d'alcoyle dans le milieu d'hydrocarbure liquide contenant le dialcoylmagnésium.

5. Procédé selon une des revendications 1 à 4, caractérisé en ce que la réaction est effectuée sous agitation constante pendant toute la durée de la précipitation.

6. Procédé selon une des revendications 1 à 4, caractérisé en ce que la vitesse d'agitation est modifiée à un instant tel que la quantité de chlorure d'alcoyle introduite progressivement dans le milieu d'hydrocarbure liquide contenant le dialcoylmagnésium correspondant à un rapport molaire $R_3Cl/R_1MgR_2$ inférieur ou égal à 0,25.

7. Procédé selon une des revendications 1 à 6, caractérisé en ce que la précipitation est effectuée en introduisant, dans une première étape, d'une façon progressive et simultanée le dialcoylmagnésium et le chlorure d'alcoyle dans le milieu d'hydrocarbure liquide en quantités telles qu'au maximum 50 % des quantités de chacun des réactifs mis en oeuvre soient introduits, puis dans une seconde étape, en introduisant d'abord rapidement la quantité restante du dialcoylmagnésium et ensuite progressivement, la quantité restante du chlorure d'alcoyle dans le milieu réactionnel.

8. Procédé selon la revendication 7, caractérisé en ce que la réaction est effectuée en modifiant la vitesse d'agitation à un instant quelconque de l'étape d'introduction progressive et simultanée du dialcoylmagnésium et du chlorure d'alcoyle dans le milieu d'hydrocarbure liquide.

9. Procédé selon une des revendications 1 à 8, caractérisé en ce que pour la préparation de supports de catalyseurs pour la polymérisation et la copolymérisation de l'éthylène on utilise un rapport molaire entre le chlorure d'alcoyle et le dialcoylmagnésium entre 1,85 et 1,95.

10. Procédé selon une des revendications 1 à 8, caractérisé en ce que pour la préparation de supports de catalyseurs pour la polymérisation et la copolymérisation du propylène on utilise un rapport molaire entre le chlorure d'alcoyle et le dialcoylmagnésium entre 1,95 et 2,2.

11. Supports sphéroidiques de catalyseurs pour la polymérisation et la copolymérisation des $\alpha$-olefines, notamment de l'éthylène et du propylène, constitués de particules, lesdites particules étant constituées essentiellement de chlorure de magnésium et d'un composé donneur d'électrons, pouvant être obtenus par le procédé selon l'une des revendications 1 à 10.


## Patentansprüche

1. Verfahren zur Herstellung von Trägern für katalysatoren zur Polymerisation und Copolymerisation von $\alpha$-Olefinen, insbesondere von Ethylen und Propylen, die aus Partikeln bestehen, die im wesentlichen aus Magnesiumchlorid und einer Elektronendonorverbindung bestehen und durch Fällung in einem flüssigen kohlenwasserstoff aus einem darin löslichen Magnesiumdialkyl der Formel $R_1MgR_2$, worin $R_1$ und $R_2$ gleiche oder verschiedene Alkylreste mit 2 bis 12 Kohlenstoffatomen sind, und einem Alkylchlorid erhalten sind,
dadurch **gekennzeichnet**, daß
die Fällung unter den folgenden Bedingungen durchgeführt wird:
   – Man verwendet ein Alkylchlorid der Formel $R_3Cl$, worin $R_3$ ein sekundärer oder tertiärer Alkylrest mit 3 bis 12 Kohlenstoffatomen ist, wobei das Molverhältnis von Alkylchlorid zu Magnesiumdialkyl zwischen 1,5 und 2,5 liegt,
   und
   – die Fällung wird durchgeführt
      – in Gegenwart einer Elektronendonorverbindung mit Komplexbildungsvermögen, die ausgewählt ist unter Sulfoxiden, Sulfonen, Ethern und Hexamethylphosphorsäuretriamid, in einer solchen Menge, daß das Molverhältnis zwischen dieser Elektronendonorverbindung und dem Magnesiumdialkyl zwischen 0,01 und 2 liegt,
      und
      – unter Rühren bei einer Temperatur zwischen 5 und 80° C,
und zwar so, daß man sphäroidale Partikel mit einem Massenmittel des Durchmessers, Dm, zwischen 10 und 100 μm und einem Verhältnis des Massenmittels Dm zum Zahlenmittel Dn kleiner oder gleich 3 erhält.

2. Verfahren nach Anspruch 1, dadurch gekennzeichnet, daß man als Elektronendonorverbindung einen aliphatischen Ether der Formel $R_4OR_5$ verwendet, worin $R_4$ und $R_5$ gleiche oder verschiedene Alkylreste mit 1 bis 12 Kohlenstoffatomen sind.

3. Verfahren nach Anspruch 2, dadurch gekennzeichnet, daß die Fällung bei einer Temperatur zwischen 35 und 80° C durchgeführt wird, wobei ein Molverhältnis von Ether zu Magnesiumdialkyl zwischen 0,03 und 1 und vorzugsweise zwischen 0,2 und 0,5 angewandt wird, wobei dieser Ether entweder ganz mit dem Magnesiumdialkyl oder aufgeteilt zwischen diesem und dem Alkylchlorid zugegeben werden kann.

4. Verfahren nach einem der Ansprüche 1 bis 3, dadurch gekennzeichnet, daß die Fällung durchgeführt wird, indem das Alkylchlorid nach und nach dem flüssigen, das Magnesiumdialkyl enthaltenden Kohlenwasserstoff zugegeben wird.

5. Verfahren nach einem der Ansprüche 1 bis 4, dadurch gekennzeichnet, daß die Reaktion unter stetigem Rühren während der Gesamtdauer der Fällung durchgeführt wird.

6. Verfahren nach einem der Ansprüche 1 bis 4, dadurch gekennzeichnet, daß die Rührgeschwindigkeit zu einem Zeitpunkt, bei dem die Menge des Alkylchlorids, das dem das Magnesiumdialkyl enthaltenden flüssigen Kohlenwasserstoff nach und nach zugegeben wird, einem Molverhältnis von $R_3Cl/R_1MgR_2$ von kleiner oder gleich 0,25 entspricht, geändert wird.

7. Verfahren nach einem der Ansprüche 1 bis 6, dadurch gekennzeichnet, daß die Fällung durchgeführt wird, indem in einem ersten Schritt nach und nach und gleichzeitig das Magnesiumdialkyl und das Alkylchlorid dem flüssigen Kohlenwasserstoff in solchen Mengen zugegeben werden, daß höchstens 50 % der Gesamtmenge jedes Reagens zugegeben werden und dann in einem zweiten Schritt zunächst schnell die Restmenge an Magnesiumdialkyl und anschließend nach und nach die Restmenge an Alkylchlorid dem Reaktionsgemisch zugegeben werden.

8. Verfahren nach Anspruch 7, dadurch gekennzeichnet, daß die Reaktion durchgeführt wird, indem die Rührgeschwindigkeit in dem Schritt, bei dem das Magnesiumdialkyl und das Alkylchlorid dem flüssigen Kohlenwasserstoff nach und nach und gleichzeitig zugegeben werden, verändert wird.

9. Verfahren nach einem der Ansprüche 1 bis 8, dadurch gekennzeichnet, daß man für die Herstellung von Trägern für Katalysatoren zur Polymerisation und Copolymerisation von Ethylen ein Molverhältnis von Alkylchlorid zu Magnesiumdialkyl zwischen 1,85 und 1,95 anwendet.

10. Verfahren nach einem der Ansprüche 1 bis 8, dadurch gekennzeichnet, daß man für die Herstellung der Träger für Katalysatoren zur Polymerisation und Copolymerisation von Propylen ein Molverhältnis von Alkylchlorid zu Magnesiumdialkyl zwischen 1,95 und 2,2 anwendet.

11. Sphäroidale Träger für Katalysatoren zur Polymerisation und Copolymerisation von $\alpha$-Olefinen, insbesondere von Ethylen und Propylen, die aus Partikeln bestehen, die im wesentlichen aus Magnesiumchlorid und einer Elektronendonorverbindung bestehen und die mit dem Verfahren nach einem der Ansprüche 1 bis 10 erhältlich sind.

## Claims

1. Process for the preparation of supports for catalysts for the polymerization and the copolymerization of $\alpha$-olefins, particularly of ethylene and propylene, consisting of particles consisting essentially of magnesium chloride and an electron donor compound and being obtained by precipitation of a dialkylmagnesium of the formula $R_1MgR_2$, wherein $R_1$ and $R_2$ are alkyl radicals, being the same or different, and having 2 to 12 carbons atoms, soluble in the liquid hydrocarbon, and an alkyl chloride in a liquid hydrocarbon,
**characterized** in that
the precipitation is effected under the following conditions:
– an alkyl chloride of the formula $R_3Cl$ is used in which $R_3$ is a secondary or tertiary alkyl radical having 3 to 12 carbon atoms, the molar ratio between the alkyl chloride and the diaklylmagnesium being comprised between 1,5 and 2,5,
and
– the precipitation is effected
– in the presence of an electron donor compound having a complex forming tendency, said electron donor compound being selected from sulfoxides, sulfones, ethers and hexamethylphosphorotriamide, in a quantity such that the molar ratio between said electron donor compound and the dialkylmagnesium being comprised between 0,01 and 2,
and
– with stirring at a temperature comprised between 5 and 80°C,
such that spheroidal particles are obtained having a weight average diameter Dm comprised between 10 and 100 µm and a ratio between the weight average diameter Dm and the number average diameter Dn below or equal to 3.

2. Process according to claim 1, characterized in that as the electron donor compound an aliphatic ether of the formula $R_4OR_5$ is used wherein $R_4$ and $R_5$ are alkyl radicals being the same or different, and having 1 to 12 carbons atoms.

3. Process according to claim 2, characterized in that the precipitation is performed at a temperature comprised between 35 and 80°C using a molar ratio between the ether and the dialkylmagnesium between 0,03 and 1 and preferably between 0,2 and 0,5, wherein said ether can be introduced either in its entirety together with the diaklylmagnesium or divided between the latter and the alkyl chloride.

4. Process chloride to claims 1 to 3, characterized in that the precipitation is performed by introducing gradually the alkyl chloride into the liquid hydrocarbon containing the dialkylmagnesium.

5. Process according to one of the claims 1 to 4, characterized in that the reaction is performed with constant stirring throughout the duration of the precipitation.

6. Process according to one of claims 1 to 4, characterized in that the speed of stirring is modified at a moment when the quantity of alkyl chloride gradually introduced into the liquid hydrocarbon containing the dialkylmagnesium corresponds to a molar ratio $R_3Cl/R_1MgR_2$ below or equal to 0,25.

7. Process according to one of the claims 1 to 6, characterized in that the precipitation is performed by introducing, in a first stage, gradually and simultaneously the dialkylmagnesium and the alkyl chloride into the liquid hydrocarbon in such a quantity that at most 50 % of the quantities of each of the reactants employed are introduced, and then, in a second stage, by introducing first of all rapidly the remaining quantity of dialkylmagnesium and then gradually the remaining quantity of the alkyl chloride into the reaction medium.

8. Process according to claim 7, characterized in that the reaction is performed by modifying the speed of stirring at any moment in the stage of gradual and simultaneous introduction of the dialkylmagnesium and the alkyl chloride into the liquid hydrocarbon.

9. Process according to one of claims 1 to 8, characterized in that for the preparation of supports for catalysts for the polymerisation and the copolymerization of ethylene a molar ratio between the alkyl chloride and the dialkyl magnesium comprised between 1,85 and 1,95 is applied.

10. Process according to one fo the claims 1 to 8, characterized in that for the preparation of supports for catalysts for the polymerization and the copolymerization of propylene a molar ratio between the alkyl chloride and the dialkylmagnesium comprised between 1,95 and 2,2 is applied.

11. Spheroidal supports for catalysts for the polymerization and the copolymerization of $\alpha$-olefins, particularly of ethylene and propylene, consisting of particles consisting essentially of magnesium chloride and an electron donor compound, said supports being obtainable by the process according to one of claims 1 to 10.